(19) **Europäisches Patentamt**

**European Patent Office**

**Office européen des brevets**

(11) Veröffentlichungsnummer : **0 086 904**
**B1**

(12) # EUROPÄISCHE PATENTSCHRIFT

(45) Veröffentlichungstag der Patentschrift :
21.11.85

(51) Int. Cl.⁴ : **G 06 F   7/544**

(21) Anmeldenummer : 82200196.2

(22) Anmeldetag : 18.02.82

(54) **Digitale Parallel-Rechenschaltung für positive und negative Binärzahlen.**

(43) Veröffentlichungstag der Anmeldung :
31.08.83 Patentblatt 83/35

(45) Bekanntmachung des Hinweises auf die Patenterteilung : 21.11.85 Patentblatt 85/47

(84) Benannte Vertragsstaaten :
DE FR GB IT NL

(56) Entgegenhaltungen :
FR-A- 1 575 934
US-A- 3 500 027
US-A- 3 761 698
THE RADIO AND ELECTRONIC ENGINEER, Band 41,
Nr. 10, Oktober 1971, Seiten 463-464, London (GB);
G.WHITE: "A versatile cellular array for binary
arithmetic"

(73) Patentinhaber : Deutsche ITT Industries GmbH
Hans-Bunte-Strasse 19 Postfach 840
D-7800 Freiburg (DE)
DE
ITT INDUSTRIES INC.
320 Park Avenue
New York, NY 10022 (US)
FR GB IT NL

(72) Erfinder : Uhlenhoff, Arnold
Hölderlinstrasse 33
D-7830 Emmendingen (DE)

(74) Vertreter : Morstadt, Volker, Dipl.-Ing.
c/o Deutsche ITT Industries GmbH Patent/Lizenzabteilung Postfach 840 Hans-Bunte-Strasse 19
D-7800 Freiburg/Breg. (DE)

EP 0 086 904 B1

**Beschreibung**

Die Erfindung betrifft eine digitale Parallel-Rechenschaltung für positive und negative Binärzahlen, wobei für die letzteren die Zweierkomplement-Darstellung zu wählen ist, zur Bildung des Produkts einer ersten und einer zweiten Binärzahl und der anschließenden Addition einer dritten Binärzahl mit einem Addierwerk aus Volladdierstufen und mit einem Multiplizierwerk, das aus in Spalten und Zeilen angeordneten Volladdierern mit jeweils zugeordnetem UND-Gatter besteht, welche UND-Gatter in der Ausgangszeile fehlen können, vgl. den Oberbegriff des Anspruchs 1.

Multiplizierwerke derartigen Aufbaus sind beispielsweise in dem Buch von A. Shah et al. « Integrierte Schaltungen in digitalen Systemen », Band 2, Basel 1977, Seiten 171 bis 193 und 211 bis 216 ausführlich beschrieben, vgl. insbesondere die Fig. IX. 62 bis IX. 66, IX. 67 und IX. 77 auf den Seiten 172, 174 bis 177 und 212. Bei allen diesen Multiplizierwerken handelt es sich um Parallelmultiplizierer im Gegensatz zu den im genannten Buch ebenfalls an anderer Stelle behandelten Serien- bzw. Parallel-Serien-Multiplizierern. Für schnelle Multiplikationen, wie sie in digitalen Signalprozessoren benötigt werden, kommen nur die erwähnten Parallel-Multiplizierer in Betracht, und im Rahmen der Erfindung sind lediglich Parallel-Multiplizierer als die zu verwendenden Multiplizierwerke vorgesehen.

Wie aus dem Tagungsbericht des 9. Internationalen Kongresses Mikroelektronik, München 10. bis 12. November 1980, Seiten 56 bis 62 und 105 bis 108 hervorgeht, besteht bei derartigen schnellen Signalprozessoren die arithmetische Grundoperation in der Bildung des Produkts zweier Binärzahlen und der anschließenden Addition einer dritten Binärzahl. Beim Signalprozessor der genannten Seite 62 ist ein schnelles Multiplizierwerk vorgesehen, dem ein Addierer nachgeschaltet ist. Vom Rechenwerk der genannten Seite 108 ist lediglich ausgeführt, daß es aus einem Multiplizierer und einem Addierer besteht.

Bei den Addierern des eben genannten Standes der Technik handelt es sich selbstverständlich um Paralleladdierer, deren Rechenzeit im wesentlichen durch diejenige Zeit bestimmt ist, die zur Bildung des Übertrags der höchstwertigen Stelle erforderlich ist, vgl. das erstgenannte Buch, Seiten 92 bis 117. Wird nach dem zweitgenannten Buch eine Anordnung aus einem Multiplizierwerk mit nachgeschaltetem Addierwerk gewählt, so addiert sich zur Rechenzeit des Multiplizierwerks die des Addierwerks. Andererseits ist aber die Rechenzeit des Multiplizierwerks im wesentlichen durch die Rechenzeit der in seiner Ausgangszeile angeordneten Volladdierer bestimmt, da in dieser Zeile der Übertrag bis zur höchstwertigen Stelle des Produkts zu bilden ist. Bei einigen Ausführungsformen derartiger Multiplizierwerke ist diese Ausgangszeile wiederum ein vollständiger Paralleladdierer, vgl. die Fig. IX.63 bis IX.65 des erstgenannten Buches. Die Rechenzeit der aus Multiplizierwerk mit nachgeschaltetem Addierwerk bestehenden Parallel-Rechenschaltung setzt sich also aus der des Multiplizierwerks ohne Ausgangszeile, der der Ausgangszeile und der der Addierwerks zusammen, wobei die beiden letzteren etwa gleich groß sind, während die erstere demgegenüber um etwa den Faktor 2 bis 4 kleiner ist.

Für schnelle Signalprozessoren der bekannten Art ist diese Rechenzeit jedoch zu lang. Die Aufgabe der in den Ansprüchen gekennzeichneten Erfindung besteht daher darin, die Rechenzeit einer digitalen Parallel-Rechenschaltung der eingangs genannten Art mit Multiplizierwerk und Addierwerk zu verkürzen. Dies wird nach der Erfindung im wesentlichen dadurch erreicht, daß das Addierwerk nicht dem Multiplizierwerk nachgeordnet wird, sondern daß es in das Multiplizierwerk eingefügt wird, und zwar zwischen dessen vorletzter Zeile und der Ausgangszeile. Dadurch wird erreicht, daß die Volladdierer des Addierwerks bezüglich ihrer Summand- und Übertragseingänge bzw. ihres Summen- und Übertragsausgang wie eine Multiplizierwerk-Zeile geschaltet werden können, so daß die ausschließliche Übertragsbildung in dieser Zeile vom Volladdierer der niedersten Wertigkeit zu dem der höchsten Wertigkeit — was für die lange Rechenzeit verantwortlich ist — entfallen kann. Vielmehr werden die einzelnen Volladdierer des an dieser Stelle eingefügten Addierwerks wie eine Multiplizierwerk-Zeile geschaltet, was im allgemeinen bedeutet, daß jeder Volladdierer einer Zeile als Übertragseingangssignal das Übertragsausgangssignal eines Volladdierers der nächstniederen Wertigkeit der vorausgehenden Zeile empfängt. Das erfindungsgemäß eingefügte Addierwerk trägt somit nur unwesentlich zur Rechenzeiterhöhung des Multiplizierwerks bei, da die eben genannte Übertragsbildung in ihm selber entfällt. Die Parallel-Rechenschaltung nach der Erfindung hat somit eine Rechenzeit, die nicht wesentlich größer ist als die des reinen Multiplizierwerks. Sie setzt sich nämlich aus der Übertragsbildungszeit der Ausgangszeile und der geringfügig erhöhten Rechenzeit des Multiplizierwerks mit dem erfindungsgemäß eingefügten Addierwerk zusammen. Auch die Rechenzeit der Vorzeichen-Korrekturstufe ist wesentlich kleiner als die Übertragsbildungszeit des nach dem Stand der Technik getrennt vorgesehenen Addierwerks.

Die Erfindung wird nun anhand der Figuren der Zeichnung näher erläutert.

Figur 1   zeigt stark schematisiert den Aufbau einer Parallel-Rechenschaltung nach dem bekannten Stand der Technik,

Figur 2   zeigt ebenfalls stark schematisiert den Aufbau der erfindungsgemäßen Parallel-Rechenschaltung,

Figur 3   zeigt zum besseren Verständnis der Erfindung den Aufbau eines Multiplizierwerks allgemeiner Art,

Figur 4   zeigt ein erstes Ausführungsbeispiel der Vorzeichen-Korrekturstufe,

Figur 5   zeigt ein zweites Ausführungsbeispiel der Vorzeichen-Korrekturstufe,

Figur 6 zeigt das Schaltbild des ersten Ausführungsbeispiels der Vorzeichen-Korrekturstufe nach Fig. 4 für die Realisierung in MOS-Technik, und

Figur 7 zeigt das Schaltbild für die Realisierung der Vorzeichen-Korrekturstufe nach Fig. 5 in MOS-Technik.

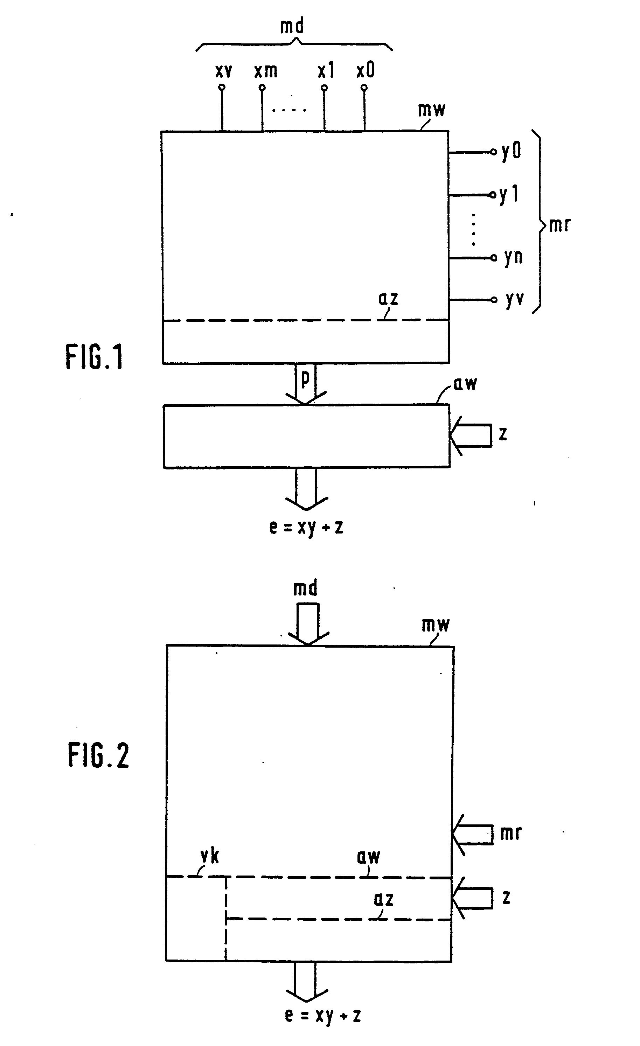

In Fig. 1 ist der schematische Aufbau einer Parallel-Rechenschaltung nach dem genannten Stand der Technik gezeigt. Das Multiplizierwerk mw ist von einer der verschiedenen bekannten Arten ; in Zusammenhang mit der Erfindung ist lediglich von Bedeutung, daß es die Ausgangszeile az hat.

Das Multiplizierwerk mw hat parallele Multiplikand-Eingänge md und parallele Multiplikator-Eingänge mr. Ihnen sind die Stellensignale x0, x1 ... xm, xv der ersten Binärzahl x bzw. y0, y1 ... yn, yv der zweiten Binärzahl y zugeführt. Das Produkt p = xy ist dem einen Paralleleingang des Addierwerks aw und die dritte Binärzahl z dessen anderem Paralleleingang zugeführt. Am Ausgang des Addierwerks aw tritt somit das Rechenergebnis e = xy + z auf.

Wie beim Rechnen mit algebraischen, d. h. positiven und negativen Binärzahlen üblich, enthalten diese nicht nur soviele Stellen wie ihrer Wertigkeit entspricht, sondern noch eine weitere Vorzeichenstelle (Index v), deren Binärziffer durch Konvention die Eigenschaft positiv bzw. negativ festlegt. Wie dem oben erstgenannten Buch zu entnehmen ist, werden üblicherweise positive Zahlen mit der Ziffer 0, dagegen negative Binärzahlen mit der Ziffer 1 in der Vorzeichenstelle geschrieben.

Um den Rechenvorgang und die dazu erforderlichen Schaltungstypen zu vereinfachen, wird für die Subtraktion von Binärzahlen die sogenannte Zweierkomplement-Darstellung gewählt, d. h. im Fall der Subtraktion wird mittels derselben Volladdierer wie bei Addition das Zweierkomplement der zu subtrahierenden Zahl wie üblich addiert. Da andererseits bekanntlich in der Algebra nicht zwischen den Rechenvorschriften Addition und Subtraktion unterschieden wird, sondern lediglich die eine Rechenvorschrift Addition, jedoch angewendet auf positive und negative Zahlen, besteht, werden negative Binärzahlen ganz allgemein unter anderem in der Zweierkomplement-Darstellung angegeben (es gibt auch noch die Einerkomplement-Darstellung, die im Rahmen der Erfindung jedoch ohne Interesse ist).

In der Zweierkomplement-Darstellung gibt es für die Zahl 0 eine einzige Darstellung, und zwar 00 ... 00, d. h. die Binärzahl 0 wird als positive Zahl (Ziffer der Vorzeichenstelle ist 0) aufgefaßt. Bei einer vorgegebenen Stellenzahl von beispielsweise 4 lautet die größte positive Zahl 0111, was im Dezimalsystem der Zahl + 7 entspricht. Aufgrund des Bildungsgesetzes der Zweierkomplement-Darstellung (die Ziffern der jeweiligen Stellen invertieren und zur invertierten Zahl in der niedrigsten Stelle die Zahl 1 addieren) ist die mit den erwähnten vier Stellen darstellbare größte negative Zahl 1 000, was der Dezimalzahl − 8 entspricht. Bei der Multiplikation zweier gleichstelliger Zahlen ergibt sich das größte positive Ergebnis aus der Multiplikation der beiden größten negativen Zahlen, was zu einer Binärzahl der allgemeinen Form 0100 ... 0 führt ; im obigen vierstelligen Beispiel also ergibt dezimal (− 8) · (− 8) die achtstellige Binärzahl 01000000 entsprechend dezimal + 64. Andererseits ist die bei einer derartigen Multiplikation auftretende größte negative Zahl von der Form 11..., wobei jeder der sechs Punkte für eine beliebige Binärziffer steht. Die eben geschilderten Eigenschaften des bei der Multiplikation von Binärzahlen in Zweierkomplement-Darstellung auftretenden Zahlenbereichs werden bei der Erfindung ausgenutzt.

Die Fig. 2 zeigt den prinzipiellen Aufbau der Parallel-Rechenschaltung nach der Erfindung. Das Addierwerk aw ist danach in das Multiplizierwerk als vorletzte Zeile der Gesamtanordnung aufgenommen, d. h. das Addierwerk aw ist zwischen der vorletzten Zeile des Multiplizierwerks mw und dessen Ausgangszeile az eingefügt, wobei jedoch vom Addierwerk aw und der Ausgangszeile az die Volladdierstufe bzw. der Volladdierer der jeweiligen Vorzeichenstelle weggelassen ist und durch eine Vorzeichenkorrekturstufe vk ersetzt ist. Die dritte Binärzahl z ist dabei den Volladdierern des Addierwerks zugeführt, und zwar den Übertragseingängen seiner Volladdierstufen.

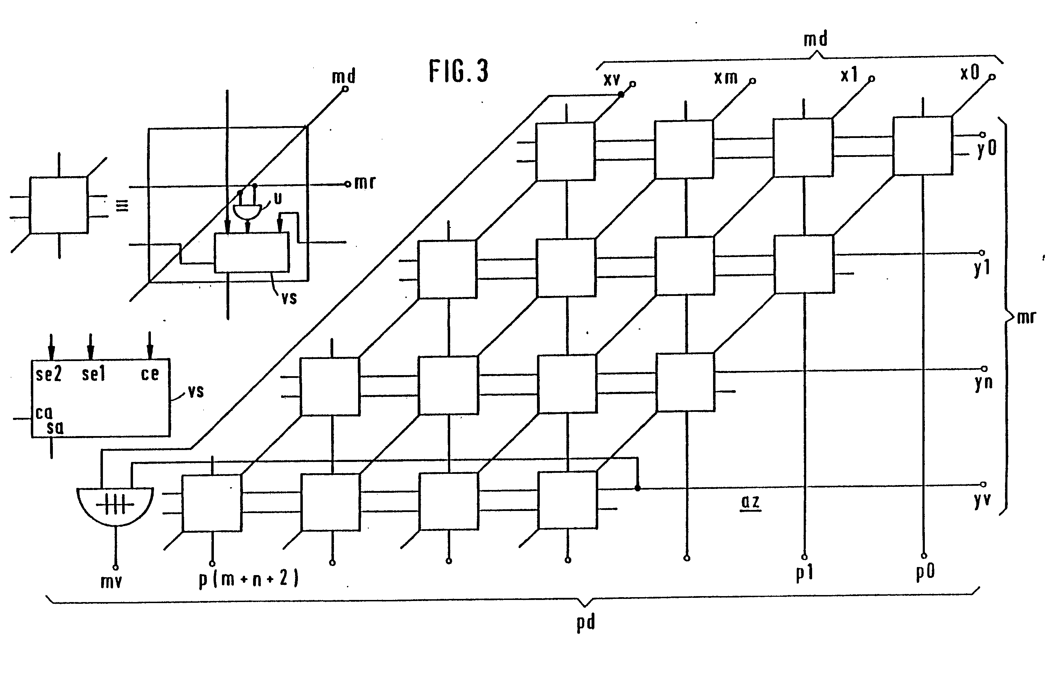

Zum besseren Verständnis des Aufbaus üblicher Multiplizierwerke ist in Fig. 3 schematisch die Anordnung nach Fig. IX. 76, Seite 212 des Buches von A. Shah et al gezeigt, welche Figur wiederum eine schematisierte Darstellung der Fig. IX. 62 auf Seite 172 ist. Durch die Fig. 3 soll für die Zwecke der Erfindungsbeschreibung gezeigt werden, daß jede quadratische Zelle der zweidimensionalen Zeilen- und Spaltenanordnung die Volladdierstufe vs sowie das UND-Gatter u enthält, dessen beiden Eingängen das entsprechende Stellensignal von Multiplikand md und Multiplikator mr zugeführt ist. Die Volladdierstufe vs hat wie üblich die beiden Summandeingänge se1, se2, den Übertragseingang ce, den Summenausgang sa und den Übertragsausgang ca. Diese sind in der gezeigten Weise mit den entsprechenden Ein- und Ausgängen der Nachbarzellen verknüpft, so daß sich die regelmäßige Anordnung der Fig. 3 ergibt, die auch als iteratives Array in der genannten Literatur bezeichnet ist. Von Interesse ist, daß bei dieser Anordnung die Stellenzahl des Produkts pd gleich der Summe der Stellenzahl m des Multiplikanden md und der Stellenzahl n des Multiplikators mr ist. Im vorliegenden Fall mit m = n = 2 liegt die höchste Wertigkeit m + n + 2 in der siebten Stelle p(m + n + 2), während die achte Stelle pv die Vorzeichenstelle des Produkts pd ist. Die Wertigkeit der Produktstellen ist gleich der entsprechenden Zweierpotenz mit dem Exponenten 0, 1 ... m + n + 2 der Produktstellen p0, p1 ... p(m + n + 2). Das Vorzeichen mv des Produkts pd ergibt sich mittels des eingezeichneten Antivalenzgatters, das die Vorzeichenstellen xv und yv modulo-2-verknüpft.

Das Charakteristische bezüglich der Zusammenschaltung der einzelnen Zellen der Fig. 3 ist, daß der Übertragsausgang einer Zelle mit dem Übertragseingang der links daneben liegenden Zelle derselben Zeile verbunden ist. Somit besteht das iterative Array nach Fig. 3 aus zeilenweise angeordneten üblichen Volladdierern mit Übertragsbildung in jeder Zeile.

Wie die oben genannten Figuren des Buches von A. Shah et al zeigen, sind jedoch auch andere Schaltungen iterativer Arrays möglich, nämlich beispielsweise solche, bei denen der Übertragsausgang einer Zeile zum Übertragseingang der links darunter in der nächsten Zeile liegenden Zelle führt. Bei derartigen Arrays ist dann lediglich die letzte Zeile ein üblicher Volladdierer mit Übertragsbildung innerhalb dieser letzten Zeile, also der Ausgangzeile az. In dieser Ausgangzeile fehlen dann die UND-Gatter u, wie sie in den übrigen Zellen vorhanden sind.

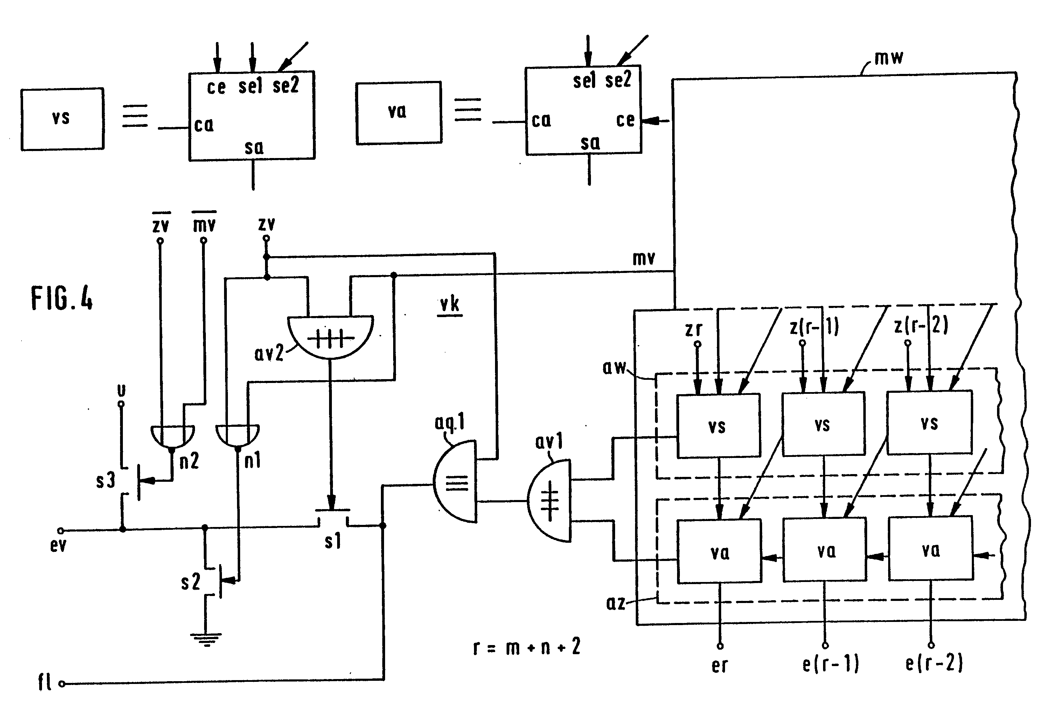

Im Anschluß an Fig. 2 zeigt die Fig. 4 ein bevorzugtes Ausführungsbeispiel für die Vorzeichen-Korrekturstufe vk, die zusammen mit den wesentlichen Stufen des Multiplizierwerks mw gezeigt ist. Vom in dieses einbezogenen Addierwerk aw sind die drei höchstwertigen Volladdierstufen vs gezeigt, ebenso von der Ausgangzeile az die drei höchstwertigen Volladdierer va, deren innerer Aufbau identisch mit dem der Volladdierstufen vs ist. Die Zuordnung der Ein- und Ausgänge der Volladdierstufen bzw. der Volladdierer ergibt sich aus der getrennten Darstellung links oben in Fig. 4. Unter Berücksichtigung dieser Zuordnung ist mit dem ersten Summandeingang se1 der jeweiligen Volladdierstufe vs der Summenausgang sa der Zelle gleicher Wertigkeit in der vorletzten Zeile des Multiplizierwerks mw verbunden und mit dem zweiten Summandeingang se2 der Übertragsausgang ca der Zelle nächstniederer Wertigkeit in der vorletzten Zeile, während dem Übertragseingang ce der jeweiligen Volladdierstufe das entsprechende Stellensignal der dritten Binärzahl z zugeführt ist, von denen die drei höchstwertigen zr, z(r − 1), z(r − 2) gezeigt sind.

Bezüglich der Volladdierer va der Ausgangzeile az ist mit dem ersten Summandeingang se1 der Summenausgang sa der Volladdierstufe vs gleicher Wertigkeit verbunden, während mit dem zweiten Summandeingang se2 der Übertragsausgang ca der Volladdierstufe vs nächstniederer Wertigkeit verbunden ist. Der Übertragseingang ce eines Volladdierers va ist mit dem Übertragsausgang ca des rechts daneben liegenden Volladdierers va verbunden. Am Ausgang dieser Volladdierer entstehen die Stellensignale des Ergebnisses e, wovon die Stellensignale er, e(r − 1), er(r − 2) gezeigt sind. Für die Laufzahl gilt im übrigen die Beziehung : r = m + n + 2. Dies ist darauf zurückzuführen, daß nach der gewählten Bezeichnungsweise in den Fig. 1 und 3 die Laufzahlen m, n den Exponenten der Binärwertigkeit der höchsten Stelle angeben, der um 1 kleiner ist als die Anzahl der Stellen (einschließlich des Vorzeichenbits). Somit gibt auch die Laufzahl r den Exponenten der Binärwertigkeit der Stelle mit der Laufzahl r an.

Das in Fig. 4 ferner gezeigte erste Ausführungsbeispiel der Vorzeichen-Korrekturstufe vk besteht aus dem ersten und dem zweiten Antivalenzgatter av1, av2, (EXOR), dem ersten Äquivalenzgatter aq1 (EXNOR), dem ersten und zweiten NOR-Gatter n1, n2 mit jeweils zwei Eingängen und den drei Schaltgliedern s1, s2, s3. Diese Bestandteile der Vorzeichenkorrekturstufe sind wie folgt untereinander verschaltet. Der jeweilige Übertragsausgang ca von Volladdierstufe vs und Volladdierer va der höchstwertigen Stelle liegt an jeweils einem der beiden Eingänge des ersten Antivalenzgatters av1, dessen Ausgang am einen Eingang des ersten Äquivalenzgatters aq1 angeschlossen ist. Seinem zweiten Eingang ist das Signal der Vorzeichenstelle zv der dritten Binärzahl z zugeführt, mit dem auch der eine Eingang des zweiten Antivalenzgatters av2 und der eine Eingang des ersten NOR-Gatters n1 gespeist ist. Der Vorzeichenausgang mv des Multiplizierwerks mw liegt am zweiten Eingang des zweiten Antivalenzgatters av2 und am zweiten Eingang des ersten NOR-Gatters n1. Den beiden Eingängen des zweiten NOR-Gatters n2 ist das invertierte Signal der Vorzeichenstelle $\overline{zv}$ der dritten Binärzahl z bzw. das invertierte Signal $\overline{mv}$ des Vorzeichenausgangs des Multiplizierwerks mw zugeführt.

Der Ausgang des ersten Äquivalenzgatters aq1 liegt über die Schaltstrecke des ersten Schaltglieds s1, dessen Steuereingang mit dem Ausgang des zweiten Antivalenzgatters av2 verbunden ist, am Vorzeichenausgang ev der Rechenschaltung. Dieser ist über die Schaltstrecke des zweiten Schaltglieds s2 am Schaltungsnullpunkt und über die des dritten Schaltglieds s3 mit der Betriebsspannungsquelle U verbunden. Der jeweilige Steuereingang des zweiten und des dritten Schaltglieds s2, s3 liegt am jeweiligen Ausgang des ersten bzw. des zweiten NOR-Gatters n1, n2. Der Ausgang des ersten Äquivalenzgatters aq1 ist zu einem weiteren Ausgang fl der Rechenschaltung geführt, an dem ein Überlaufsignal abgenommen werden kann, d. h. an diesem Ausgang fl tritt bei der vorausgesetzten positiven Logik dann ein H-Pegel auf, wenn das Rechenergebnis mehr Stellen aufweist als die Rechenschaltung Stellen hat. Dies kann beispielsweise dann der Fall sein, wenn zu einem r-stelligen Produkt pd eine ebenfalls r-stellige dritte Binärzahl z addiert wird und diese Addition einen Übertrag in die an sich nicht vorhandene nächsthöhere Stelle ergibt.

Mit einem derartigen Überlaufsignal kann beispielsweise eine Begrenzerstufe angesteuert werden, die ein Ergebnis liefert, das mit dem mit der vorhandenen Stellenzahl maximal darstellbaren Ergebnis übereinstimmt. Im allgemeinen Fall der Fig. 4 ist nämlich bei Auftreten eines derartigen Überlaufs das Rechenergebnis falsch.

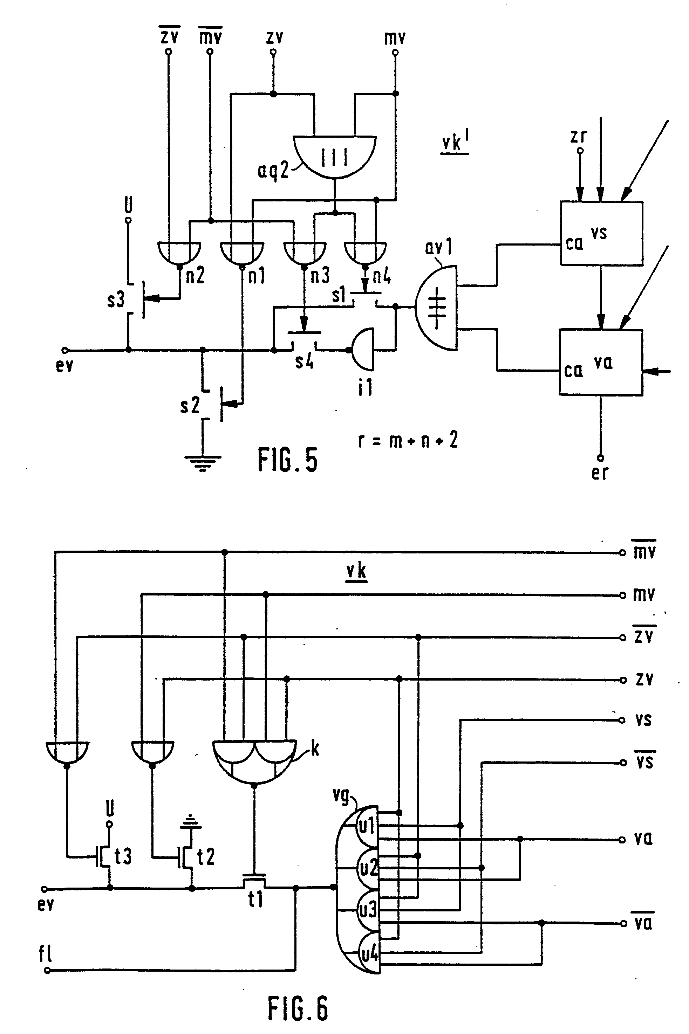

In Fig. 5 ist ein zweites Ausführungsbeispiel der Vorzeichenkorrekturstufe gezeigt, bei der der Überlaufausgang fl nach Fig. 4 nicht erforderlich ist, da diese Korrekturstufe die erwähnte Begrenzung bezüglich der Vorzeichenstelle als Eigenschaft bereits aufweist.

Die Vorzeichenkorrekturstufe vk′ nach Fig. 5 besteht aus dem ersten Antivalenzgatter av1, das auch als EXOR-Gatter bezeichnet werden kann, dem zweiten Äquivalenzgatter aq2 (das auch als EXNOR-Gatter bezeichnet werden kann), den vier NOR-Gattern n1, n2, n3, n4 mit jeweils zwei Eingängen, den vier Schaltgliedern s1, s2, s3, s4 und dem Inverter i1. Diese Bestandteile der Vorzeichenkorrekturstufe sind wie folgt untereinander verschaltet. Der jeweilige Übertragsausgang ca von Volladdierstufe vs und Volladdierer va der höchstwertigen Stelle des Multiplizierwerks mw liegt an jeweils einem der beiden Eingänge des ersten Antivalenzgatters av1, dessen Ausgang einerseits über die Schaltstrecke des ersten Schaltglieds s1 und andererseits in dieser Reihenfolge über den Inverter i1 und die Schaltstrecke des vierten Schaltglieds s4 am Vorzeichenausgang ev der Rechenschaltung liegt. Der Vorzeichenausgang mv des Multiplizierwerks mz bzw. das Signal der Vorzeichenstelle zv der dritten Binärzahl z liegt an einem der beiden Eingänge des zweiten Äquivalenzgatters aq2, dessen Ausgang mit jeweils einem Eingang des dritten bzw. des vierten NOR-Gatters n3, n4 verbunden ist. Am anderen Eingang des vierten NOR-Gatters n4 liegt der Vorzeichenausgang mv des Multiplizierwerks mw, ebenso wie auch am einen Eingang des ersten NOR-Gatters n1. Am anderen Eingang des dritten NOR-Gatters n3 liegt das invertierte Ausgangs-signal $\overline{mw}$ des Vorzeichenausgangs mw und ebenso am einen Eingang des zweiten NOR-Gatters n2, dessen anderem Eingang schließlich das invertierte Signal $\overline{zv}$ der Vorzeichenstelle zv zugeführt ist.

Der Vorzeichenausgang ev der Rechenschaltung liegt über die Schaltstrecke des zweiten Schaltglieds s2 am Schaltungsnullpunkt und die des dritten Schaltglieds s3 an der Betriebsspannungsquelle U. Der jeweilige Steuereingang der vier Schaltglieder s1 ... s4 ist mit dem jeweiligen Ausgang der NOR-Gatter entsprechend der Zuordnung s1-n4, s2-n1, s3-n2, s4-3 verbunden.

Die Erfindung ist besonders geeignet, in der Technik integrierter Isolierschicht-Feldeffektransistor-Schaltungen, also in der sogenannten MOS-Technik, realisiert zu werden. Für eine solche Realisierung zeigt die Fig. 6 das Schaltbild der Vorzeichenkorrekturstufe vk nach Fig. 4. Dabei werden als Schaltglieder jeweils ein Anreicherungstyp-Isolierschicht-Feldeffekttransistor t1, t2, t3 verwendet, dessen gesteuerter Strompfad jeweils als Schaltstrecke dient und dessen Gate mit dem Ausgang des zugehörigen NOR-Gatters bzw. des Komplexgatters k verbunden ist.

Da in der MOS-Technik bekanntlich die Realisierung von allgemeinen Logik-Gatter-Typen mit bestimmten MOS-Grundgatter-Typen erfolgt, zeigt die Fig. 6 für die Realisierung des zweiten Antivalenzgatters av2 nach Fig. 4 den Aufbau des entsprechenden Komplexgatters k. Es besteht aus zwei UND-Gliedern mit jeweils zwei Eingängen, wobei die Ausgänge der UND-Glieder NOR-verknüpft sind. Die zeichnerische Darstellung des Komplexgatters k in Fig. 6 deutet an, daß die beiden UND-Glieder keinen eigenen Lastwiderstand aufweisen, sondernlediglich das Komplexgatter k als ganzes einen solchen hat. Jeder Eingang des einen UND-Glieds ist mit dem Vorzeichenausgang mv des Multiplizierwerks mw verbunden, bzw. es ist ihm das Signal der Vorzeichenstelle zv der dritten Binärzahl z zugeführt, während jedem Eingang des anderen UND-Glieds die invertierten Signale $\overline{zv}$, $\overline{mv}$ zugeführt sind.

In Fig. 6 sind ferner das erste Antivalenzgatter av1 und das erste Äquivalenzgatter aq1 nach Fig. 4 durch das Vielfachgatter vg ersetzt, das aus den vier UND-Gliedern u1, u2, u3, u4 mit jeweils drei Eingängen besteht, wobei die Ausgänge der vier UND-Glieder wiederum NOR-verknüpft sind. Dem jeweils ersten Eingang des ersten und vierten UND-Glieds u1, u4 ist das Vorzeichensignal zv der dritten Binärzahl z direkt bzw. dem jeweils ersten Eingang des zweiten und des dritten UND-Glieds u2, u3 invertiert zugeführt. Dem jeweils zweiten Eingang des ersten und des dritten UND-Glieds u1, u3 ist das Ausgangssignal der Volladdierstufe vs der höchstwertigen Stelle direkt bzw. dem jeweils zweiten Eingang des zweiten und des vierten UND-Glieds u2, u4 invertiert zugeführt. Dem jeweils dritten Eingang des ersten und des zweiten UND-Glieds u1, u2 ist das Ausgangssignal des Volladdierers va der höchstwertigen Stelle direkt bzw. dem dritten Eingang des dritten und des vierten UND-Glieds u3, u4 invertiert zugeführt.

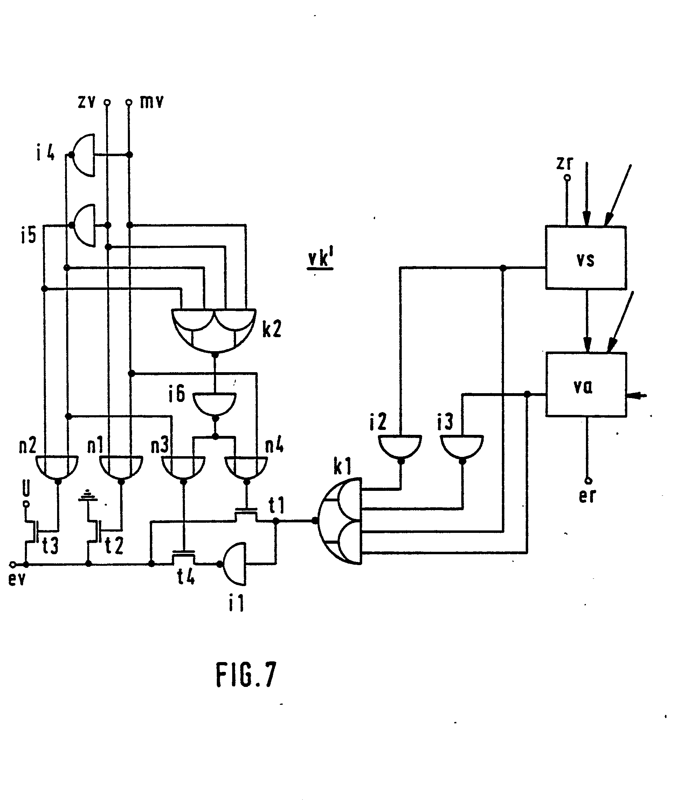

Ebenfalls für eine Realisierung in MOS-Technik zeigt die Fig. 7 das Schaltbild der Vorzeichen-Korrekturstufe vk' nach Fig. 5. Dabei wird ebenfalls wie bei Fig. 5 als Schaltglied jeweils ein Anreicherungstyp-Isolierschicht-Feldeffekttransistor t1, t2, t3, t4 verwendet, dessen gesteuerter Strompfad als Schaltstrecke dient und dessen Gate mit dem Ausgang des zugehörigen NOR-Gatters, wie oben angegeben, jeweils verbunden ist. Das erste Antivalenzgatter av1 besteht dabei aus dem ersten Komplexgatter k1 mit den beiden zugeordneten Invertern i2, i3, die, wenn der Inverter i1 nach Fig. 5 als erster Inverter bezeichnet wird, der zweite und der dritte Inverter sind. Das Komplexgatter k1 besteht seinerseits aus zwei UND-Gliedern mit jeweils zwei Eingängen, wobei die Ausgänge der UND-Glieder NOR-verknüpft sind. Jeder Eingang des einen UND-Glieds ist mit dem Übertragsausgang ca der Volladdierstufe vs bzw. des Volladdierers va verbunden, während jeder dieser beiden Übertragsausgänge über den zweiten bzw. dritten Inverter i2, i3 mit je einem Eingang des anderen UND-Glieds verbunden ist.

In vergleichbarer Weise besteht das zweite Äquivalenzgatter aq2 nach Fig. 5 aus dem zweiten Komplexgatter k2, das denselben Aufbau hat wie das erste Komplexgatter k1, ferner aus dem vierten und fünften Inverter i4, i5, sowie dem dem Ausgang des Komplexgatters k2 nachgeschalteten sechsten Inverter i6. Jedem Eingang des einen UND-Glieds ist das Signal der Vorzeichenstelle zv der dritten Binärzahl z bzw. das des Vorzeichenausgangs mv des Multiplizierwerks mw zugeführt. Diese beiden Signale liegen über den vierten bzw. den fünften Inverter i4, i5 an dem jeweiligen Eingang des anderen UND-Glieds des zweiten Komplexgatters k2.

Es ist selbstverständlich, daß beim Ausführungsbeispiel der Fig. 6 die invertierten Signale $\overline{mv}$, $\overline{zv}$, $\overline{vs}$, $\overline{va}$ ebenfalls ohne weiteres mittels eines entsprechenden Inverters aus den nichtinvertierten Signalen erzeugt werden können, wie dies in Fig. 7 anhand der Inverter i2 ... i5 gezeigt ist.

5

Die Rechenschaltung nach der Erfindung liefert am Übertragsausgang ev das Vorzeichen des Multiplikations −+ Additionsergebnisses unabhängig vom Ablauf der Rechnung praktisch sofort, wenn die Vorzeichen des Multiplikationsergebnisses, also des Produkts, und das der zu addierenden dritten Binärzahl z gleich sind, d. h. also wenn beide Vorzeichen zugleich positiv bzw. zugleich negativ sind. Für den Fall positiver Vorzeichen wird die zweite Schaltstrecke s2 bzw. der entsprechende zweite Transistor t2 vom ersten NOR-Gatter n1 leitend gesteuert, so daß der Vorzeichenausgang ev praktisch auf das Potential des Nullpunkts gelegt wird. Im Fall zweier negativer Vorzeichen wird durch das zweite NOR-Gatter n2 die dritte Schaltstrecke s3 leitend gesteuert und somit der Vorzeichenausgang ev auf das Potential der Betriebsspannungsquelle U gelegt. In positiver Logik entsprechen das Potential des Schaltungsnullpunkts dem L-Pegel und das der Betriebsspannungsquelle U dem H-Pegel und somit den Binärziffern 0 bzw 1. In diesen beiden Fällen ist die erste Schaltstrecke s1 immer gesperrt und somit vom Ausgang des ersten Äquivalenzgatters aq1 der Fig. 4 bzw. des ersten Antivalenzgatters av1 der Fig. 5 getrennt.

Für den Fall, daß die Vorzeichen des Produkts pd und der dritten Binärzahl unterschiedlich sind, d. h. also das eine negativ das andere positiv, werden die zweite und die dritte Schaltstrecke s2, s3 vom ersten bzw. zweiten NOR-Gatter n1, n2 gesperrt gehalten und auch die vierte Schaltstrecke s4 nach Fig. 5, die im vorher betrachteten Fall gleicher Vorzeichen leitend gesteuert war. Schießlich ist die erste Schaltstrecke s1 nach den Fig. 4 und 5 im Fall ungleicher Vorzeichen leitend gesteuert.

Das Verhalten der beiden Ausführungsbeispiele der Vorzeichen-Korrekturschaltung vk, vk' läßt sich durch die folgende Tabelle beschreiben :

| vs | va | zv | mv | Ausgg von av1 | e v |
|----|----|----|----|----|----|
| beliebig | beliebig | 0 | 0 | beliebig | 0 |
| | | 0 | 0 | | 0 |
| | | 0 | 0 | | 0 |
| | | 0 | 0 | | 0 |
| 0 | 0 | 1 | 0 | 0 | 0 |
| 1 | 0 | 1 | 0 | 1 | 1 |
| 0 | 1 | 1 | 0 | 1 | 1 |
| 1 | 1 | 1 | 0 | 0 | 0 |
| 0 | 0 | 0 | 1 | 0 | 1 |
| 1 | 0 | 0 | 1 | 1 | 0 |
| 0 | 1 | 0 | 1 | 1 | 0 |
| 1 | 1 | 0 | 1 | 0 | 1 |
| beliebig | beliebig | 1 | 1 | beliebig | 1 |
| | | 1 | 1 | | 1 |
| | | 1 | 1 | | 1 |
| | | 1 | 1 | | 1 |

Eine in MOS-Technik realisierte Parallel-Rechenschaltung nach der Erfindung für einen Multiplikanden mit sechzehn Stellen und einen Multiplikator mit acht Stellen und anschließender Addition einer bis zu 23-stelligen Binärzahl hatte eine Rechengeschwindigkeit von etwa 200 ns, während ein Versuchsaufbau nach dem bekannten Stand der Technik mit reinem Multiplizierwerk und nachgeschaltetem Addierwerk eine Rechengeschwindigkeit von etwa 350 ns aufwies. Diese ausgeführte Schaltung hatte ein Multiplizierwerk entsprechend der erwähnten Figur IX.64 a.a.O., wobei als « Addierwerk mit vorbestimmten Übertrag » eine Schaltung entsprechend der eigenen älteren europäischen Anmeldung 801 070 913 diente bzw. ein Addierwerk mit geschaltetem Übertrag nach der eigenen älteren europäischen Anmeldung 801 066 687 verwendet wurde, und zwar jeweils als Ausgangszeile az des Multiplizierwerks mw.

**Patentansprüche**

1. Digitale Parallel-Rechenschaltung für positive und negative Binärzahlen, wobei für die letzteren

6

die Zweierkomplement-Darstellung zu wählen ist, zur Bildung des Produkts (p = xy) einer ersten und einer zweiten Binärzahl (x, y) und der anschließenden Addition (xy + z) einer dritten Binärzahl (z) mit einem Addierwerk (aw) aus Volladdierstufen (vs) und mit einem Multiplizierwerk (mw) das aus in Spalten und Zeilen angeordneten Volladdierern (va) mit jeweils zugeordnetem UND-Gatter (u) besteht, welche UND-Gatter in der Ausgangszeile (az) fehlen können, gekennzeichnet durch folgende Merkmale :

die Volladdierstufen (vs) sind mit Ausnahme derjenigen Stufe, die der Vorzeichenstelle entspricht, als Zusatzzeile zwischen die vorletzte Zeile und die Ausgangszeile (az), deren Volladdierstufe der Vorzeichenstelle ebenfalls fehlt, derart eingefügt,

— daß die beiden Summandeingänge (se1, se2) jeder Volladdierstufe (vs) mit denjenigen Ausgängen der Volladdierstufen der vorletzten Zeile des Multiplizierwerks (mw) verbunden sind, an denen ohne Addierwerk (aw) die beiden Summandeingänge (se1, se2) jedes Volladdierers (va) der Ausgangszeile (az) angeschlossen wären,

— daß der Summenausgang (sa) jeder Volladdierstufe (vs) am einen Summandeingang (se1) des Volladdierers (va) gleicher Wertigkeit und

— daß der Übertragsausgang (ca) jeder Volladdierstufe (vs) am anderen Summandeingang (se2) des Volladdierers (va) der nächsthöheren Wertigkeit liegt, die Stellensignale (z0 ... zv) der dritten Binärzahl (z) sind dem Übertragseingang (ce) der Volladdierstufe (vs) gleicher Wertigkeit zugeführt, und

die fehlende Volladdierstufe und der fehlende Volladdierer sind durch eine Vorzeichen-Korrekturstufe (vk) ersetzt.

2. Parallel-Rechenschaltung nach Anspruch 1, gekennzeichnet durch folgende Vorzeichen-Korrekturstufe (vk) :

— der jeweilige Übertragsausgang (ca) von Volladdierstufe (vs) und Volladdierer (va) der höchstwertigen Stelle liegt an jeweils einem der beiden Eingänge eines ersten Antivalenzgatters (av1),

— das Signal der Vorzeichenstelle (zv) der dritten Binärzahl (z) und der Ausgang des ersten Antivalenzgatters (av1) liegen an jeweils einem der beiden Eingänge eines ersten Äquivalenzgatters (aq1),

— der Vorzeichenausgang (mv) des Multiplizierwerks (mw) und das Signal der Vorzeichenstelle (zv) der dritten Binärzahl (z) liegen an jeweils einem der beiden Eingänge eines zweiten Antivalenzgatters (av2),

— der Ausgang des ersten Äquivalenzgatters (aq1) liegt über die Schaltstrecke eines ersten Schaltglieds (s1), dessen Steuereingang mit dem Ausgang des zweiten Antivalenzgatters (av2) verbunden ist, am Vorzeichenausgang (ev) der Rechenschaltung, der über die Schaltstrecke eines zweiten Schaltglieds (s2) am Schaltungsnullpunkt und über die eines dritten Schaltglieds (s3) mit der Betriebsspannungsquelle (U) verbunden ist,

— der jeweilige Steuereingang des zweiten und des dritten Schaltglieds (s2, s3) liegt am jeweiligen Ausgang eines ersten bzw. eines zweiten NOR-Gatters (n1, n2) mit jeweils zwei Eingängen, und

— jeweils einem der Eingänge des ersten NOR-Gatters (n1) sind das Signal des Vorzeichen-Ausgangs (mv) und das Vorzeichensignal (zv) der dritten Binärzahl (z) direkt und jeweils einem der Eingänge des zweiten NOR-Gatters (n2) sind diese Signale invertiert zugeführt.

3. Parallel-Rechenschaltung nach Anspruch 1, gekennzeichnet durch folgende Vorzeichen-Korrekturstufe (vk') :

— der jeweilige Übertragsausgang (ca) von Volladdierstufe (vs) und Volladdierer (va) der höchstwertigen Stelle liegt an jeweils einem der beiden Eingänge eines ersten Antivalenzgatters (av1),

— der Vorzeichenausgang (mv) des Multiplizierwerks (mw) und das Signal der Vorzeichenstelle (zv) der dritten Binärzahl (z) liegen an jeweils einem der beiden Eingänge eines zweiten Äquivalenzgatters (aq2),

— der Ausgang des ersten Antivalenzgatters (av1) liegt einerseits über die Schaltstrecke eines ersten Schaltglieds (s1) und andererseits über einen Inverter (i1) und eine dazu in Serie liegende die Schaltstrecke eines vierten Schaltglieds (s4) am Vorzeichenausgang (ev) der Rechenschaltung, der über die Schaltstrecke eines zweiten Schaltglieds (s2) am Schaltungsnullpunkt und über die eines dritten Schaltglieds (s3) mit der Betriebsspannungsquelle (U) verbunden ist,

— der jeweilige Steuereingang der vier Schaltglieder (s1... s4) liegt am jeweiligen Ausgang eines ersten, zweiten, dritten bzw. vierten NOR-Gatters (n1... n4) mit jeweils zwei Eingängen, und zwar mit folgender Zuordnung s1-n4, s2-n1, s3-n2, s4-n3,

— der jeweils eine Eingang des dritten und des vierten NOR-Gatters (n3-n4) liegt am Ausgang des zweiten Äquivalenzgatters (aq2), während dem jeweils anderen Eingang dieser NOR-Gatter (n3, n4) das Signal des Vorzeichenausgangs (mv) des Multiplizierwerks (mw) direkt bzw. invertiert zugeführt ist, und jeweils einem der Eingänge des ersten NOR-Gatters (n1) ist das Signal des Vorzeichenausgangs (mv) und das Signal der Vorzeichenstelle (zv) der dritten Binärzahl (z) direkt, und den Eingängen des zweiten NOR-Gatters (n2) sind diese Signale invertiert zugeführt.

4. Parallel-Rechenschaltung nach einem der Ansprüche 1 bis 3, gekennzeichnet durch ihre Realisierung in der Technik integrierter Isolierschicht-Feldeffekttransistor-Schaltungen (MOS-Technik).

5. Parallel-Rechenschaltung nach Anspruch 4, dadurch gekennzeichnet, daß die Schaltglieder (s1... s4) Anreicherungstyp-Isolierschicht-Feldeffekttransistoren (t1... t4) sind.

7

6. Parallel-Rechenschaltung nach einem der Ansprüche 2, 4 und 5, gekennzeichnet durch folgende Merkmale :

— das erste Äquivalenzgatter (aq1) und das erste Antivalenzgatter (av1) sind zu einem Vielfachgatter (vg) vereinigt, das aus vier UND-Gliedern (u1... u4) mit je drei Eingängen besteht, deren Ausgänge NOR-verknüpft sind,

— dem jeweils ersten Eingang des ersten und des vierten UND-Glieds (u1, u4) ist das Signal der Vorzeichenstelle (zv) der dritten Binärzahl (z) direkt und dem jeweils ersten Eingang des zweiten und des dritten UND-Glieds (u2, u3) invertiert zugeführt,

— dem jeweils zweiten Eingang des ersten und des dritten UND-Glieds (u1, u3) ist das Ausgangssignal der Volladdierstufe (vs) der höchstwertigen Stelle direkt und dem jeweils zweiten Eingang des zweiten und des vierten UND-Glieds (u2, u4) invertiert zugeführt, und

— dem jeweils dritten Eingang des ersten und des zweiten UND-Glieds (u1, u2) ist das Ausgangssignal des Volladdierers (va) der höchstwertigen Stelle direkt und dem jeweils dritten Eingang des dritten und des vierten UND-Glieds (u3, u4) invertiert zugeführt.

**Claims**

1. A digital parallel computing circuit for positive and negative binary numbers, the latter having to be represented in two's complement for forming the product (p = xy) of a first binary number (x) and a second binary number (y) and then adding (xy + z) a third binary number (z) by means of an adder (aw) consisting of full-adder stages (va) and by means of a multiplier (mw) consisting of full adders (va) arranged in columns and rows and each having an AND gate (u) associated therewith, which AND gates may be omitted in the output row (az), characterized by the following features :

The full-adder stages (vs) are inserted without that for the sign digit as an additional row between the next to the last row and the output row (az), whose full-adder stage for the sign digit is also omitted, in such a way

— that the augend and addend inputs (se1, se2) of each full-adder stage (vs) are connected to those outputs of the full-adder stages of the next to the last row of the multiplier (mw) to which the augend and addend inputs (se1, se2) of each full adder (va) of the output row (az) would be connected without the adder (aw),

— that the sum output (sa) of each full-adder stage (vs) is connected to the augend input (se1) of the full-adder (va) of the same weight, and

— that the carry output (ca) of each full-adder stage (vs) is connected to the addend input (se2) of the next more significant full adder (va) ;

— the digit signals (z0 ... zv) of the third binary number (z) are applied to the carry input (ce) of the full-adder stage (vs) of the same weight, and

— the omitted full-adder stage and the omitted full adder are replaced with a sign-correcting stage (vk).

2. A parallel computing circuit as claimed in claim 1, characterized by the following sign-correcting stage (vk) ;

— The carry outputs (ca) of the most significant full-adder stage (vs) and the most significant full adder (va) are each connected to one of the two inputs of a first exclusive-OR gate (av1) ;

— the signal of the sign digit (zv) of the third binary number (z) and the output of the first exclusive-OR gate (av1) are each applied to one of the two inputs of a first exclusive-NOR gate (aq1) ;

— the sign output (mv) of the multiplier (mw) and the signal of the sign digit (zv) of the third binary number (z) are each applied to one of the two inputs of a second excluvise-OR gate (av2) ;

— the output of the first exclusive-NOR gate (aq1) is connected, via the controlled current path of a first switching element (s1) having its control input connected to the output of the second exclusive-OR gate (av2), to the sign output (ev) of the computing circuit, which sign output is grounded via the controlled curent path of a second switching element (s2) and connected to the supply-voltage source (U) via the controlled current path of a third switching element (s3) ;

— the control inputs of the second and third switching elements (s2, s3) are connected to the output of a first two-input NOR gate (n1) and to the output of a second two-input NOR gate (n2), respectively, and

— the signal of the sign output (mv) and the sign signal (zv) of the third binary number (z) are each applied to one of the two inputs of the first NOR gate (n1) direct, and to one of the two inputs of the second NOR gate (n2) in inverted form.

3. A parallel computing circuit as claimed in claim 1, characterized by the following sign-correcting stage (vk') :

— The carry output (ca) of the most significant full-adder stage (vs) and the most significant full adder (va) are each connected to one of the two inputs of a first exclusive-OR gate (av1) ;

— the sign output (mv) of the multiplier (mw) and the signal of the sign digit (zv) of the third binary number (z) are each applied to one of the two inputs of a second exclusive-NOR gate (aq2) ;

— the output of the first exclusive-OR gate (av1) is connected to the sign output (ev) of the computing circuit, on the one hand, via the controlled current path of a first switching element (s1) and, on the other hand, via an inverter (i1) and the controlled current path of a fourth switching element (s4) in this order, which sign output (ev) is grounded via the controlled current path of a second switching element (s2) and connected to the supply-voltage source (U) via the controlled current path of a third switching element (s3) ;

— the control inputs of the second (s2), third (s3), fourth (s4), and first (s1) switching elements are connected to the outputs of first, second, third, and fourth two-input NOR gates (n1... n4), respectively ;

— the third and fourth NOR gates (n3, n4) each have one input connected to the output of the second exclusive-NOR gate (aq2), while the other inputs of these NOR gates (n3, n4) are fed with the signal of the sign output (mv) of the multiplier (mw) direct and after inversion, respectively, and the signal of the sign output (mv) and the sign signal (zv) of the third binary number (z) are applied to the inputs of the first NOR gate (n1) direct, and to the inputs of the second NOR gate (n2) in inverted form.

4. A parallel computing circuit as claimed in any one of claims 1 to 3, characterized by implementation using insulated-gate field-effect transistor integrated circuitry (MOS technology).

5. A parallel computing circuit as claimed in claim 4, characterized in that the switching elements (s1... s4) are enhancement-mode insulated-gate field-effect transistors (t1... t4).

6. A parallel computing circuit as claimed in claims 2, 4 und 5, characterized by the following features :

— The first exclusive-NOR gate (aq1) and the first exclusive-OR gate (av1) are combined in a multiple gate (vg) consisting of four three-input AND elements (u1... u4) having their outputs NORed ;

— the sign signal (zv) of the third binary number (z) is applied to the first inputs of the first and fourth AND elements (u1, u4) direct, and to the first inputs of the second and third AND elements (u2, u3) in inverted form ;

—· the output signal of the most significant full-adder stage (vs) is applied to the second inputs of the first and third AND elements (u1, u3) direct, and to the second inputs of the second and fourth AND elements (u2, u4) in inverted form, and

— the output signal of the most significant full-adder (va) is applied to the third inputs of the first and second AND elements (u1, u2) direct, and to the third inputs of the third and fourth AND elements (u3, u4) in inverted form.

## Revendications

1. Circuit de calcul numérique parallèle pour nombres binaires positifs et négatifs, ces derniers nécessitant de choisir une représentation en complément à deux, pour former le produit (p = xy) d'un premier et d'un second nombre binaires (x, y) et ensuite l'addition (xy + z) d'un troisième nombre binaire (z), avec un organe additionneur (aw) composé d'étages additionneurs complets (vs) et avec un organe multiplicateur (mw) constitué d'additionneurs complets (va) disposés en colonnes et en rangées avec des portes ET correspondantes (u), lesquelles portes ET peuvent manquer dans la ligne de sortie (az), caractérisé en ce que

les étages additionneurs complets (vs), à l'exception de l'étage correspondant au chiffre de signe, sont insérés comme ligne supplémentaire entre l'avant-dernière ligne et la ligne de sortie (az), dont l'étage additionneur complet ne possède également pas de chiffre de signe, de telle manière que

— les deux entrées d'opérande (se1, se2) de chaque étage additionneur complet (vs) sont reliées avec les sorties des étages additionneurs complets de la ligne précédente de l'organe multiplicateur (mw) auxquelles, en l'absence d'organe additionneur (aw), seraient reliées les deux entrées d'opérande (se1, se2) de chaque additionneur complet (va) de la ligne de sortie (az),

— la sortie de somme (sa) de chaque étage additionneur complet (vs) est reliée à une entrée d'opérande (se1) de l'additionneur complet (va) de même valeur, et que

— la sortie de report (ca) de chaque étage additionneur complet (vs) est reliée à l'autre entrée d'opérande (se2) de l'additionneur complet (va) de la valeur immédiatement supérieure,

les signaux de chiffres (z0 ... zv) du troisième nombre binaire (z) sont injectés à l'entrée de report (ce) de l'étage additionneur complet (vs) de même valeur, et

l'étage additionneur complet manquant et l'additionneur complet manquant sont remplacés par un étage de correction de signe (vk).

2. Circuit de calcul parallèle selon la revendication 1 caractérisé par l'étage de correction de signe (vk) suivant :

— les sorties de report (ca) de l'étage additionneur complet et de l'additionneur complet (va) du chiffre de poids fort sont reliées chacune à l'une des deux entrées d'une première porte OU-exclusif (av1),

— le signal du chiffre de signe (zv) du troisième nombre binaire (z) et la sortie de la première porte OU-exclusif (av1) sont reliés à chacune des deux entrées d'une première porte OU-exclusif-NON (aq1),

— la sortie de signe (mv) de l'organe multiplicateur (mw) et le signal du chiffre de signe (zv) du troisième nombre binaire (z) sont reliés à chacune des deux entrées d'une seconde porte OU-exclusif (av2),

— la sortie de la première porte OU-exclusif-NON (aq1) est reliée, par l'intermédiaire de la voie commutée d'un premier élément de commutation (s1) dont l'entrée de commande est reliée à la sortie de la seconde porte OU-exclusif (av2), à la sortie de signe (ev) du circuit de calcul qui, par l'intermédiaire de la voie de commutation d'un second élément de commutation (s2), est reliée au point zéro du circuit et, par l'intermédiaire d'un troisième élément de commutation (s3), à la source de tension de service (U),

— les entrées de commande des second et troisième éléments de commutation (s2, s3) sont reliées aux sorties correspondantes d'une première et d'une seconde portes OU-NON (n1, n2) possédant deux entrées, et

— les deux entrées de la première porte OU-NON (n1) reçoivent respectivement le signal de la sortie de signe (mv) et le signal de signe (zv) du troisième nombre binaire (z) sous une forme directe tandis que les deux entrées de la seconde porte OU-NON (n2) reçoivent ces signaux sous forme inversée.

3. Circuit de calcul parallèle selon la revendication 1, caractérisé par l'étage de correction de signe (vk') suivant :

— les sorties de report (ca) de l'étage additionneur complet et de l'additionneur complet (va) du chiffre de poids sont reliées chacune à l'une des deux entrées d'une première porte OU-exclusif (av1),

— la sortie de signe (mv) de l'organe multiplicateur (mw) et le signal du chiffre de signe (zv) du troisième nombre binaire (z) sont reliés à chacune des deux entrées d'une seconde porte OU-exclusif NON (aq2),

— la sortie de la première porte OU-exclusif (av1) est reliée, d'une part par l'intermédiaire de la voie de commutation d'un premier élément de commutation (s1) et d'autre part par l'intermédiaire d'un inverseur (i1) et par la voie de commutation montée en série avec lui d'un quatrième élément de commutation (s4), avec la sortie de signe (ev) du circuit de calcul qui, par l'intermédiaire de la voie de commutation d'un second élément de commutation (s2), est reliée au point zéro du circuit et par l'intermédiaire d'un troisième élément de commutation (s3) à la source de tension de service (U),

— les entrées de commande des quatre éléments de commutation (s1... s4) sont reliées aux sorties correspondantes d'une première, d'une seconde, d'une troisième et d'une quatrième portes OU-NON (n1... n4) possédant deux entrées, avec la correspondance s1-n4, s2-n1, s3-n2, s4-n3,

— la première entrée de la troisième et de la quatrième portes OU-NON (n3, n4) est reliée à la sortie de la seconde porte OU-exclusif-NON (aq2), tandis que l'autre entrée de ces portes OU-NON (n3-n4) reçoit le signal de la sortie de signe (mv) de l'organe multiplicateur (mw) directement ou après inversion, que les entrées de la première porte OU-NON (n1) reçoivent le signal de la sortie de signe (mv) et le signal de signe (zv) du troisième nombre binaire (z) sous une forme directe et que les deux entrées de la seconde porte OU-NON (n2) reçoivent ces signaux sous forme inversée.

4. Circuit de calcul parallèle selon l'une des revendications 1 à 3, caractérisé par sa réalisation suivant la technique des circuits intégrés à transistors à effet de champ à grille isolée (technique MOS).

5. Circuit de calcul parallèle selon la revendication 4, caractérisé en ce que les éléments de commutation (s1... s4) sont des transistors à effet de champ à grille isolée du type à enrichissement (t1 ... t4).

6. Circuit de calcul parallèle selon l'une des revendications 2, 4 et 5, caractérisé en ce que

— la première porte OU-exclusif-NON (aq1) et la première porte OU-exclusif (av1) sont réunies en une porte multiple (vg) constituée de quatre éléments ET (u1 ... u4) possédant chacun trois entrées et dont les sorties sont reliées par une porte OU-NON,

— la première entrée des premier et quatrième éléments ET (u1, u4) reçoit le signal de signe (zv) du troisième nombre binaire (z) sous sa forme directe, et la première entrée des second et troisième éléments ET (u2, u3) sous la forme inversée,

— la seconde entrée des premier et troisième éléments ET (u1, u3) reçoit le signal de sortie de l'étage additionneur complet (vs) du chiffre de poids fort sous sa forme directe, et la seconde entrée des second et quatrième éléments ET (u2, u4) sous la forme inversée, et

— la troisième entrée des premier et second éléments ET (u1, u2) reçoit le signal de sortie de l'additionneur complet (va) du chiffre de poids fort sous sa forme directe, et la troisième entrée des troisième et quatrième éléments ET (u3, u4) sous la forme inversée.

FIG.1

$$e = xy + z$$

FIG.2

$$e = xy + z$$

FIG.3

$p(m+n+2)$

FIG.4

r = m + n + 2

0 086 904

FIG. 5

$$r = m + n + 2$$

FIG. 6

FIG.7